# EUROPÄISCHE PATENTSCHRIFT

(11) **EP 1 860 596 B1**
(45) Veröffentlichungstag und Bekanntmachung des Hinweises auf die Patenterteilung: **08.09.2010**
(21) Anmeldenummer: 06010636.6
(22) Anmeldetag: 24.05.2006
(51) Int. Cl.: G06K 19/07, G06K 7/00, G05B 19/418, G06Q 10/00

(54) **Identifizierungsvorrichtung zum Ressourcenmanagement von Meterware**
Identification device for resource management of endless materials
Dispositif d'identification destiné à la gestion des ressources de marchandises au mètre

(43) Veröffentlichungstag der Anmeldung: 28.11.2007
(73) Patentinhaber: Homag Holzbearbeitungssysteme AG, 72296 Schopfloch (DE)
(72) Erfinder: Gauss, Achim, 72280 Dornstetten/Hallwangen (DE); Rathgeber, Peter, 72280 Dornstetten (DE); Schmid, Johannes, 72181 Starzach/Wachendorf (DE)
(74) Vertreter: HOFFMANN EITLE

(56) Entgegenhaltungen:
- DE-A- 19 900 086
- DE-A- 19 932 900
- DE-A1- 10 016 975
- DE-A1- 19 741 163
- DE-A1- 19 846 295
- DE-B3- 10 331 509
- US-A- 4 742 470
- US-A- 6 134 066
- US-A1- 2005 179 721
- US-B1- 6 267 291

## Beschreibung

Die vorliegende Erfindung betrifft die Verwendung einer Kantenmaterialrolle zum Beschichten der Schmalseite von Werkstücken, die vor allem in der holzbearbeiteten Industrie eingesetzt werden.

### Stand der Technik

Beschichtungswerkstoffe wie zum Beispiel Schmalseitenbeschichtungen, die auf die Schmalflächen von plattenförmigen Werkstücken aufgebracht werden, aber auch andere als Meterware hergestellte Werkstoffe, werden gewöhnlich auf Rollen gelagert und von den Rollen aus der Verarbeitung zugeführt. Im Falle von Kanten können hierbei je nach Dicke des Beschichtungsmaterials die auf der Rolle aufgewickelten Längen 100 bis 1000 Meter betragen. Zur Verarbeitung werden diese Kantenrollen im Bereich einer Kantenanleimmaschine aufgebaut und von Hand oder automatisch der Maschine zugeführt, die die Kante an einem vorbeilaufenden Werkstück anleimt. Jede Rolle benötigt dabei einen Bevorratungsplatz und eine Transportvorrichtung, um zur richtigen Zeit korrekt in die Kantenanleimmaschine eingelegt (eingewechselt) zu werden. Insbesondere bei größeren Rollenzahlen ist das Wechseln und Einlegen der Rollen ein erheblicher Arbeitsaufwand. Weiter ist auch ein nicht unerheblicher Mehraufwand aufgrund des häufigeren Zugriffs auf das Lager zu verzeichnen, bei dem die richtige

Rolle im Lager identifiziert und von einer Bedienperson zur Kantenanleimmaschine gebracht werden muss.

In den letzten Jahren ist, angetrieben von der gesteigerten Verbrauchernachfrage an Fertigprodukten wie Möbeln, der Bedarf an Kantenmaterial stetig gestiegen. Während jedoch in der Vergangenheit die Hersteller von kantenbeschichteten Platten vornehmlich große Stückzahlen an Platten mit nur wenigen Kantenarten (Dicke, Farbe, Form, Werkstoff etc.) herstellten und somit nur wenige, große Kantenrollen vorrätig bzw. im Einsatz haben mussten, ist in den letzten Jahren ein zunehmender Trend zur Individualisierung, d.h. zu kleineren Losgrößen mit einer einhergehenden größeren Losvielfalt, zu beobachten. Dementsprechend müssen Hersteller heutzutage eine bald unüberschaubare Zahl von Rollenarten ordern, lagern und verarbeiten, wobei häufig eine bestimmte Kantenrolle nur für sehr geringe Plattenzahlen verwendet wird. Dementsprechend nimmt der Platzbedarf der Rollen stark zu und dementsprechend aufwändig gestaltet sich dann auch das Handling und der Transport der Rollen. Oft ist ein Mitarbeiter nur mit diesen Tätigkeiten beschäftigt.

Bestehende Systeme sind für diese Anforderung jedoch nicht flexibel genug. So ist eine im Stand der Technik bekannte Lösung, die Rollen mit Hilfe der elektronischen Datenverarbeitung zu erfassen, wozu sie mit einem Barcode zu Identifikationszwecken versehen werden. Wird an der Kantenanleimmaschine eine bestimmte Kante benötigt, die nicht im Kantenmagazin der Maschine vorhanden ist, so muss eine Bedienperson diese Rolle aus dem Lager holen und am Kantenmagazin der Maschine einlagern. Die Kante muss anhand des Barcodes identifiziert werden, so dass eine zentrale Datenbank die Daten des Barcodes mit weiteren Materialstammdaten verbindet und dann das Einlegen der Rolle und die Verarbeitung in die Kantenanleimmaschine anhand dieser Daten durchführt. Das heißt, dass zunächst sämtliche für die Verarbeitung notwendige Prozessparameter, wie Leimtemperatur, Abrollgeschwindigkeit etc. bei der Lieferung vom Kantenhersteller in die Datenbank übertragen werden müssen, was bei der erwähnten Vielzahl kleiner Losgrößen aufwändig ist. Weiter ändern sich während der Bearbeitung einige Daten, insbesondere der Parameter Restlaufmeter, die für die weitere Verwendungsfähigkeit der Kantenrolle von Bedeutung sind und gespeichert werden müssen.

So ergibt sich bei den immer kleiner werdenden Losgrößen häufig der Umstand, dass Rollen nur teilweise, z.B. zu 10% verbraucht werden, bevor eine andere Kantenrolle an der Kantenanleimmaschine benötigt wird. Die Rolle muss dann aus der Maschine genommen werden und bis zum nächsten Einsatz wieder gelagert werden. Da jedoch das System aufgrund der lediglich mit Barcode versehenen Rolle keine Möglichkeit hat, zwischen einer neuen und einer bereits angefangenen Rolle zu unterscheiden, kann es hier zu Fehlern beim Rollennachschub kommen, wenn beim nächsten Einsatz eine neue Rolle anstatt einer bereits angefangenen in die Maschine eingelegt (eingewechselt) wird oder umgekehrt. Dann meldet entweder die Datenbank ein Rollenende einer bereits angefangenen Rolle, obwohl eine neue Rolle eingelegt wurde oder das System rechnet noch mit Restlaufmetern, während die (vorher bereits teilweise verbrauchte) Rolle bereits zu Ende ist. Fehler können auch entstehen, wenn beim Einlegen der Rolle vergessen wird, den Barcode einzulesen.

Ferner offenbart die DE 100 16 975 A1 eine Fadenspule für eine Textilmaschine, wobei die Fadenspule einen Transponder aufweist.

Als weiterer Stand der Technik ist das Dokument US 6,134,066 A bekannt, das eine Aufnahme- und Wiedergabevorrichtung offenbart, welche Vorrichtung eine Bandkassette verwendet.

Als weiterer Stand der Technik ist eine Laminatbahnrolle gemäß DE 199 00 086 A1 bekannt. Bei dieser Laminatbahnrolle mit einer Mehrzahl von auf der Laminatbahn aufgebrachten Transpondern, wobei die Rolle einen länglichen Wickelkern mit zwei Enden aufweist, ist zumindest ein Anlaufstück an einem Ende des Wickelkerns als Teleskopierschutz und/oder Transportschutz der Laminatbahn vorgesehen. Derartige Laminatbahnrollen können als Gepäck- bzw. Fluggepäckanhänger Anwendung finden.

Weiter ist aus der DE 199 32 900 A1 ein Datenspeicher bekannt, der insbesondere zur Verwendung in einem Laufwerk geeignet ist, bei dem eine Leseinrichtung und eine optionale Schreibeinrichtung in der Aussparung im Zentralbereich des Datenspeichers angeordnet sind. Als Ausgangsmaterial für den Datenspeicher ist eine Polymerfolie aus biaxial orientierten Polypropylen vorgesehen, wobei auf einer Seite dieser Polymerfolie eine Adhäsionsschicht aus Acrylatkleber angebracht ist.

Als weiterer Stand der Technik ist das Dokument US 2005/0179721 A1 bekannt, in dem ein Bedrucken eines Objekts mit dimensionaler Oberfläche mit einem Bild beschrieben ist.

### Darstellung der Erfindung

Es ist demnach Aufgabe der vorliegenden Erfindung, eine Verwendung einer Kantenmaterialrolle zu entwickeln, bei der jeder Kantenmaterialrolle eindeutig Prozessparameter sowohl zukünftiger als auch vergangener Verarbeitungsschritte zugeordnet werden können, um die oben genannten Probleme überwinden zu können und ein effektives "Kantenmanagement" umzusetzen. Weiter ist es Aufgabe der vorliegenden Erfindung, ein System und ein Verfahren zum Management von Kantenmaterialrollen zu entwickeln.

Die Erfindung löst diese Aufgabe und ist in den unabhängigen Ansprüchen definiert.

Vorteilhafte Ausgestaltungen ergeben sich aus den Unteransprüchen.

In diesem Zusammenhang wird eine Kantenmaterialrolle mit einer berührungslosen (kabellosen) beschreib- und auslesbaren Informationsspeichereinheit bereitgestellt. Somit sind stets die aktuellen Prozessparameter des Kantenmaterials direkt an der Kantenmaterialrolle verfügbar und gegebenenfalls modifizierbar, ob sie sich nun im Lager, beim Transport, beim Einlegen oder in einer Verarbeitungsmaschine befindet. Ein vorheriges Zuordnen von Kantenmaterialrollen und aktuellen Prozessparametern, das das Einlegen bzw. Rüsten erfordert, entfällt. Es ergibt sich somit, im Vergleich zur Datenbank gestützten Speicherung, auch eine Verkürzung der Beschaffungs-, Transport- und Handhabungszeiten.

Bei Anordnung der Identifizierungsvorrichtung auf einem Endabschnitt des Kantenmaterials bleibt stets eine sichere physische Verbindung zwischen Informationsspeichervorrichtung und somit zwischen den darauf gespeicherten Prozessparametern und dem Kantenmaterial gegeben. Insbesondere in einer industriellen Umgebung trägt dies zu einer sicheren Datenspeicherung und fehlerfreien Zuordnung von Daten und Kantenmaterial bei.

Das Kantenmaterial kann in einer das Kantenmaterial aufnehmenden Kassette untergebracht sein. Dadurch kann die Handhabung der Kassette standardisiert werden und für Bedienpersonen vereinfacht gemacht werden. Zudem entfällt das fehleranfällige Einlegen in an der Verarbeitungsmaschine vorhandene Magazine oder Schächte für das Kantenmaterial, da lediglich die Kassette, ähnlich wie eine Audiocassette, eingelegt (eingewechselt) wird. Vorteilhaft ist auch, dass das Kantenmaterial durch die Kassette geschützt wird, was in einer industriellen Fertigungsumgebung ein wichtiger Punkt ist. Zudem ist weiterhin die Informationsspeichereinheit stets an dem Kantenmaterial verfügbar und die gespeicherten Prozessparameter somit auslesbar und modifizierbar. Der Aufwand für Bevorratung, Handling, Transport und Beschaffung sinkt wesentlich. Bei verbrauchtem Kantenmaterial kann die Kassette wieder an den Hersteller zurückgesandt werden, der aus den modifizierten Daten des Kantenmaterials Rückschlüsse auf Einsatzbedingungen und -frequenz ziehen kann und diese für die eigene Produkt- bzw. Angebotsverbesserung verwenden kann.

Besonders bevorzugt ist bei der Identifizierungsvorrichtung die Informationsspeichereinheit ein RFID-Tag. Somit wird ein berührungsloses (kabelloses) Auslesen/Schreiben von Daten (Prozessparametern) von und auf die dem Kantenmaterial zugeordnete Informationsspeichereinheit je nach Bedarf auch auf größere Entfernung, z.B. innerhalb der gesamten Fabrikhalle, ermöglicht. Es können des weiteren Schreib-/Leseköpfe an beliebig wählbaren Stellen der Maschine platziert werden, die zudem sehr widerstandsfähig gegen die in der Fertigung unvermeidbare Verschmutzung durch Staub und ähnliches sind.

Weiter kann die Informationsspeichereinheit eine magnetische Speichereinheit sein. Diese Alternative ist eine äußerst kostengünstige und wartungsarme Lösung, die zudem hohe Datenmengen und kurze Auslese- bzw. Schreibzeiten ermöglicht.

Bei Kantenmaterial entfalten die bereits genannten Vorteile besondere Wirkung, da Kanten besonderen Schutz gegen Reißen oder Brechen benötigen. Durch die Identifizierungsvorrichtung erzielten Zeitersparnis bei der Handhabung, dem Transport und der Verarbeitung (kurze Datenübertragungszeiten) des Kantenmaterials wird zudem den stetigen Geschwindigkeitssteigerungen in der Produktion aufgrund vermehrten Wettbewerbsdrucks Rechnung getragen.

Die vorliegende Erfindung stellt zur Lösung der eingangs genannten Problematik ein System zur Identifizierung und Management von Kantenmaterialrollen zur Verfügung. Das System bringt somit die bereits genannten Vorteile zur Geltung und ermöglicht damit ein sicheres, schnelles und einfaches Management des Kantenmaterials. Die Transporteinheit kann hierbei sowohl automatisch als auch manuell sein.

Weiter umfasst ein solches erfindungsgemäßes System bevorzugt eine Einfädeleinheit, mit der das Kantenmaterial in die Verarbeitungsmaschine eingefädelt bzw. aus ihr ausgefädelt wird. Durch die Einfädeleinheit wird das schwierige, fehleranfällige und zeitraubende Einfädeln bzw. Ausfädeln der Kante wesentlich verkürzt.

Die Schreib-/Lesevorrichtung ist bevorzugt eingerichtet, Prozessparameter aus der Informationsspeichereinheit an die Verarbeitungsmaschine zu übertragen, und von der Verarbeitungsmaschine im Laufe der Verarbeitung aktualisierte Prozessparameter an die Informationsspeichereinheit zu übertragen. Somit stehen die Prozessparameter auf einfache und schnelle Weise der Verarbeitungsmaschine zur Verfügung und werden in Echtzeit aktualisiert. Jede Kantenmaterialrolle ist also zu jedem Zeitpunkt ihres "Lebens" stets auf dem aktuellen Stand und trägt diese Informationen mit sich.

Schließlich stellt die Erfindung auch ein Verfahren zum Management von Kantenmaterialrollen zum Beschichten der Schmalseite von Werkstücken zur Verfügung. Dieses Verfahren ermöglicht somit einen stets aktualisierten Datenbestand an Prozessparametern und eine schnelle Verarbeitung des Kantenmaterials mit den oben für die Identifizierungsvorrichtung genannten Vorteilen. Das Einlegen (und das notwendige Ausbringen) können hierbei automatisch oder auch manuell erfolgen, das heißt sowohl maschinell als auch von Hand durch eine Bedienperson durchgeführt werden.

Während in der vorangegangenen Beschreibung an mehreren Stellen davon gesprochen wurde, dass "modifizierte" Prozessparameter auf die Informationsspeichereinheit zurück geschrieben werden, ist es natürlich nicht immer der Fall, dass die Prozessparameter tatsächlich modifiziert werden. Es ist ebenso vorstellbar und von der Erfindung erfasst, dass die Prozessparameter unverändert zurück geschrieben werden, womit sie dennoch stets auf dem aktuellen Stand bleiben.

### Kurze Beschreibung der Zeichnungen

Figur 1 ist eine Draufsicht einer Kantenrolle mit erfindungsgemäßer Identifizierungsvorrichtung nach einer ersten bevorzugten Ausführungsform.
Figur 2 ist eine Draufsicht einer Identifizierungsvorrichtung mit Kassette gemäß einer zweiten Ausführungsform der Erfindung.
Figur 3 und Figur 4 sind Draufsichten jeweils einer Ausführungsform eines Systems entsprechend der Erfindung.

### Wege zur Ausführung der Erfindung

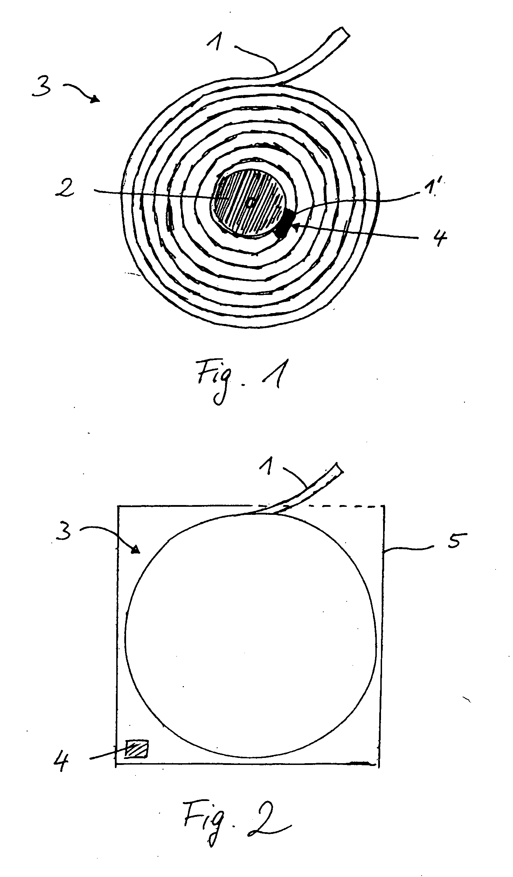

In Figur 1 ist eine erste Ausführungsform der Erfindung gezeigt. Kantenmaterial 1 ist auf einer Spule 2 zu einer Rolle 3 aufgewickelt. An dem Ende des Kantenmaterialstreifens, der an der Spule anliegt, dient ein Abschnitt 1' des Kantenmaterials als Träger für einen RFID-Tag 4, der aus einem Speicherchip und einer Antenne (nicht gezeigt) besteht. Die Kantenrolle ist damit schnell identifizierbar, da der RFID-Tag 4 richtungsunabhängig von einem Schreib-/Lesegerät ausgelesen/beschrieben werden kann. Der Speicherchip enthält Prozessparameter als Daten, wie zum Beispiel die nötige Leimtemperatur, die aktuelle Rollenlänge, Materialparameter und so weiter. Diese Daten können bereits beim Hersteller des Kantenmaterials auf dem Chip gespeichert werden.

Figur 2 zeigt eine zweite Ausführungsform der Erfindung, bei der die Kantenrolle 3 in einer Kassette 5 aufgewickelt ist. Die Kassette trägt an geeigneter Stelle einen RFID-Tag 4, der wie in der ersten Ausführungsform aufgebaut sein kann. Die standardisierte Kassette 5, die die Kantenrolle 3 schützt, wird bei Bedarf an der Maschine automatisch aus dem Lager geholt, in ein Kantenmagazin eingelegt und der Verarbeitungsmaschine zugeführt. Während der Verarbeitung ändert sich vor allem der Parameter Restlaufmeter der auf dem RFID-Tag 4 gespeichert wird und vor jeder nachfolgenden Verarbeitung der selben Rolle ausgelesen und mit den Erfordernissen der Produktionsaufträge verglichen wird. Sollte nicht genügend Rollenmaterial zur Verfügung stehen, greift das System auf eine Rolle mit noch ausreichend Restlaufmetern zurück. Sollte eine derartige Rolle nicht verfügbar sein, wird automatisch beim Kantenhersteller entsprechend geordert. In der Regel werden geplante Aufträge bereits vor der eigentlichen Produktion mit dem im Lager befindlichen Kantenbestand korreliert, um damit die Kanten stets rechtzeitig für die Verarbeitung zur Verfügung stehen.

Auch für den Kantenhersteller hat die beschriebene Erfindung Vorteile. In der Praxis wird nämlich die standardisierte Kassette beim Kantenhersteller mit einer Kantenrolle befüllt und die relevanten Prozessparameter sowie weitere Daten wie Produktionsdatum, Seriennummer, Farbe, Dicke etc. werden auf dem RFID-Tag gespeichert. Beim Kunden, der die Kanten anleimt, werden dann gewisse Prozessparameter modifiziert, und auf dem Chip gespeichert. Ist eine Kassette leer, wird diese dem Kantenhersteller zurückgesandt, der die modifizierten Daten zur eigenen Produktverbesserung ausnutzten kann.

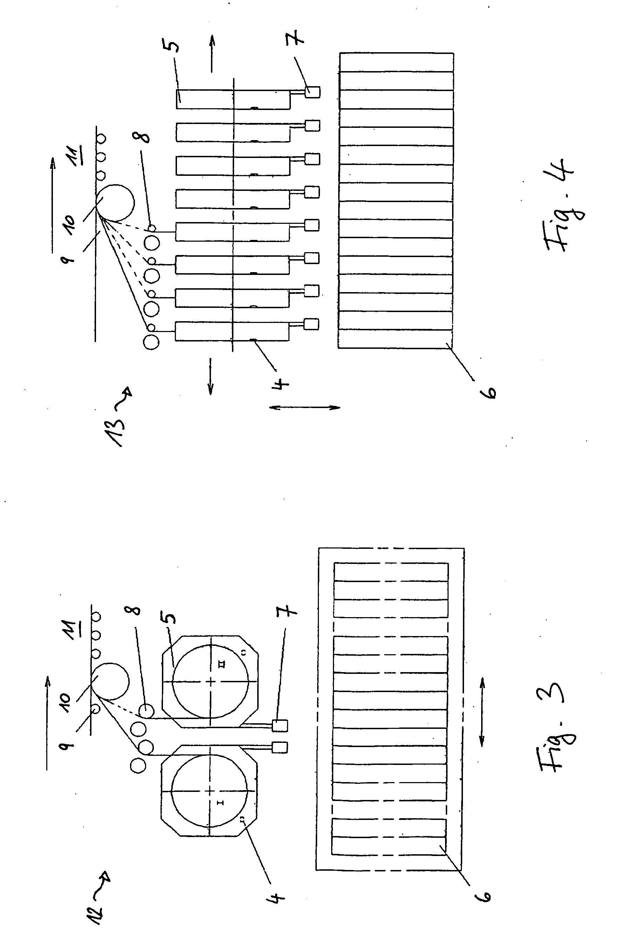

In Figuren 3 und 4 sind zwei Ausführungsformen eines erfindungsgemäßen Systems entsprechend der Erfindung veranschaulicht. Mehrere Kassetten 5 mit Kantenrollen werden in einem Kantenmagazin 6 in Vorbereitung auf ihren Einsatz in der Kantenanleimmaschine vorrätig gehalten. Von dort werden sie mit Hilfe einer Wechseleinrichtung 7 in die Maschine eingewechselt. Wenn an einer Maschine 12 nur eine geringe Anzahl verschiedener Kanten angeleimt wird und somit nur wenige Rollen gleichzeitig an der Maschine bereit stehen müssen, können die Kassetten 5 horizontal aufgelegt werden, wie es in Fig. 3 gezeigt ist. Dies vereinfacht auch das automatische oder manuelle Einlegen der Kante selbst in die Kantenanleimmaschine, da in diesem Fall die Kante bereits parallel zur Schmalseite des plattenförmigen Werkstücks 11 orientiert ist. Die Kante wird hierzu um den Rollentransport 8 gelegt und dann von der Anpressrolle 10 gegen die Schmalseite der Platte 11 gedrückt, auf die zuvor durch die Rolle 9 Leim aufgetragen wurde. Sind jedoch an einer Maschine 13 mehrere Kantenrollen gleichzeitig vonnöten, so können die zugehörigen Kassetten 5 auch vertikal in die Maschine 13 eingelegt werden, wie es in Fig. 4 gezeigt ist. Hier sind zum Beispiel acht Kassettenablagen vorgesehen, von denen die Kante jeweils abgerollt und über Rollentransporte 8 und eine Andruckrolle 10 an die Schmalseite einer Platte 11 angeleimt wird. Aufgrund der vertikalen Aufbewahrung muss jedoch in diesem Fall die Kante beim Abrollen vom Rollentransport 8 um 90° gedreht werden, bevor sie angepresst und angeleimt werden kann.

Bei sämtlichen Arbeitsschritten, die die in Figur 3 und 4 gezeigten Systeme durchführen, kann die auf der Kassette im RFID-Tag 4 gespeicherte Information ausgelesen und zur geeigneten Steuerung der Abläufe verwendet werden. Es ist hervorzuheben, dass dies sämtliche Abläufe umfassen kann, d.h. beginnend bereits mit dem Ordern beim Kantenhersteller, sowie der Einlagerung, dem Transport vom Lager zur Maschine, dem Bevorraten im Magazin, dem Einwechseln, dem Einlegen/Einfädeln der Kante an den Rollentransporten und der Anpressrolle sowie der tatsächlichen Verarbeitung (z.B. Steuerung der Durchlaufgeschwindigkeit, des Anpressdrucks etc.).

## Patentansprüche

1. System zur Identifizierung und zum Management von Kantenmaterialrollen, umfassend:
Kantenmaterialrollen zum Beschichten der Schmalseite von Werkstücken,
wobei die Kantenmaterialrollen jeweils eine Identifizierungsvorrichtung aufweisen, die eine berührungslos beschreib- und auslesbare Informationsspeichereinheit (4) umfasst,
ein Vorratsmagazin (6) zur Aufnahme der Kantenmaterialrollen
**dadurch, gekennzeichnet,**
**dass** die Informationsspeichereinheit (4) auf einem Endabschnitt (1') der Kantenmaterialrolle und/oder auf einer die Kantenmaterialrolle (1) aufnehmenden Kassette (5) vorgesehen ist,
wobei das System weiter aufweist:
eine Verarbeitungsmaschine zum Anbringen von Kantenmaterial an der Schmalseite von Werkstücken,
eine Transporteinheit (7) zum Fördern der Kantenmaterialrollen aus dem Vorratsmagazin in die Verarbeitungsmaschine, und
eine an der Verarbeitungsmaschine (12, 13) anbringbare Schreib-/Lesevorrichtung zum berührungslosen Beschreiben/Auslesen der Informationsspeichereinheit (4).

2. System nach Anspruch 1, ferner eine Einfädeleinheit für die Kantenmaterialrollen umfassend, mit der die Kantenmaterialrollen in die Verarbeitungsmaschine eingefädelt bzw. aus ihr ausgefädelt werden.

3. System nach Anspruch 1 oder 2, wobei die Schreib-/Lesevorrichtung eingerichtet ist, Prozessparameter aus der Informationsspeichereinheit an die Verarbeitungsmaschine zu übertragen, und von der Verarbeitungsmaschine im Laufe der Verarbeitung aktualisierte Prozessparameter an die Informationsspeichereinheit zu übertragen.

4. Verfahren zum Management von Kantenmaterialrollen zum Beschichten der Schmalseite von Werkstücken,
wobei die Kantenmaterialrollen jeweils eine Identifizierungsvorrichtung aufweisen, die eine berührungslos beschreib- und auslesbare Informationsspeichereinheit (4) umfasst,
**gekennzeichnet, durch** die
folgenden Schritte:
Beschreiben einer an der Kantenmaterialrolle angeordneten Informationsspeichereinheit mit für die Kantenmaterialrolle charakteristischen Prozessparametern,
Einwechseln der Kantenmaterialrolle in eine Verarbeitungsmaschine zum Anbringen von Kantenmaterial an der Schmalseite von Werkstücken,
Einfädeln des Kantenmaterials in die Verarbeitungsmaschine und Anbringen des Kantenmaterials an die Schmalseiten von Werkstücken,
berührungsloses Auslesen der Informationsspeichereinheit und Übertragen der Prozessparameter an die Verarbeitungsmaschine, die die Verarbeitung anhand der Prozessparameter vornimmt und die Prozessparameter aufgrund der Verarbeitung modifiziert, und
berührungsloses Schreiben der modifizierten Prozessparameter während der Verarbeitung auf die Informationsspeichereinheit,
wobei die Informationsspeichereinheit (4) auf einem Endabschnitt (1') der Kantenmaterialrolle und/oder auf einer die Kantenmaterialrolle (1) aufnehmenden Kassette (5) vorgesehen ist.

## Claims

1. System for the identification and management of rolls of edge material, comprising:
rolls of edge material for coating the narrow side of workpieces,
the rolls of edge material each having an identification device which comprises a contactlessly readable and writable information storage unit (4),
a storage magazine (6) for receiving the rolls of edge material,
**characterised in that**
the information storage unit (4) is provided on an end section (1') of the roll of edge material and/or on a cassette (5) which receives the roll of edge material (1),
the system further having:
a processing machine for applying edge material to the narrow side of workpieces,
a transport unit (7) for conveying the rolls of edge material out of the storage magazine into the processing machine, and
a read/write device which can be mounted on the processing machine (12, 13) for contactlessly reading/writing to the information storage unit (4).

2. System according to claim 1, further comprising a feed-in unit for the rolls of edge material, with which the rolls of edge material are fed into and out of the processing machine.

3. System according to claim 1 or 2, the read/write device being designed to transmit process parameters from the information storage unit to the processing machine, and to transmit updated process parameters from the processing machine in the course of processing to the information storage unit.

4. Method for the management of rolls of edge material for coating the narrow side of workpieces,
the rolls of edge material each having an identification device which comprises a contactlessly readable and writable information storage unit (4),
**characterised by** the following steps:
writing process parameters characteristic of the roll of edge material to an information storage unit arranged on the roll of edge material,
exchanging the roll of edge material in a processing machine for applying edge material to the narrow side of workpieces,
feeding the edge material into the processing machine and applying the edge material to the narrow sides of workpieces,
contactlessly reading out the information storage unit and transmitting the process parameters to the processing machine which performs processing with the aid of the process parameters and modifies the process parameters on the basis of processing, and
contactlessly writing the modified process parameters during processing to the information storage unit,
the information storage unit (4) being provided on an end section (1') of the roll of edge material and/or on a cassette (5) which receives the roll of edge material (1).

## Revendications

1. Système d'identification et de gestion de rouleaux de matériau de rebord, comprenant :
des rouleaux de matériau de rebord, pour revêtir le côté étroit de pièces d'oeuvre,
les rouleaux de matériau de rebord présentant chacun un dispositif d'identification comprenant une unité à mémoire d'information (4) pouvant être écrite et lue sans contact,
un magasin de réserve (6), pour recevoir les rouleaux de matériau de rebord,
**caractérisé en ce que**
l'unité à mémoire d'information (4) est prévue sur un tronçon d'extrémité (1') du rouleau de matériau de rebord et/ou sur une cassette (5) recevant le rouleau de matériau de rebord (1),
le système présentant en outre :
une machine de traitement, pour monter du matériau de rebord sur le côté étroit de pièces d'oeuvre,
une unité de transport (7), pour transporter les rouleaux de matériau de rebord, du magasin de réserve dans la machine de traitement, et
un dispositif d'écriture/lecture, susceptible d'être monté sur la machine de traitement (12, 13), pour l'écriture/lecture sans contact de l'unité à mémoire d'information (4).

2. Système selon la revendication 1, comprenant en outre une unité d'enfilage pour les rouleaux de matériau de
rebord, à l'aide de laquelle les rouleaux de matériau de rebord sont enfilés dans la machine de traitement ou extraits d'elle.

3. Système selon la revendication 1 ou 2, **caractérisé en ce que** le dispositif d'écriture/lecture est équipé pour transmettre à la machine de traitement des paramètres de processus issus de l'unité à mémoire d'information, et de transmettre, de la machine de traitement à l'unité à mémoire d'information, des paramètres de processus actualisés au cours du traitement.

4. Procédé de gestion de rouleaux de matériau de rebord pour revêtir le côté étroit de pièces d'oeuvre,
les rouleaux de matériau de rebord présentant chacun un dispositif d'identification comprenant une unité à mémoire d'information (4) pouvant être écrite et lue sans contact,
**caractérisé par** les étapes suivantes :
écriture d'une unité à mémoire d'information disposée sur le rouleau de matériau de rebord, avec des paramètres de processus caractéristiques du rouleau de matériau de rebord,
insertion du rouleau de matériau de rebord dans une machine de traitement, pour appliquer du matériau de rebord sur le côté étroit de pièces d'oeuvre,
enfilage du matériau de rebord dans la machine de traitement et application du matériau de rebord sur les côtés étroits de pièces d'oeuvre,
lecture sans contact de l'unité à mémoire d'information et transmission des paramètres de processus à la machine de traitement qui effectue le traitement à l'aide des paramètres de processus et modifie les paramètres de processus du fait du traitement, et
écriture sans contact, sur l'unité à mémoire d'information, des paramètres de traitement modifiés pendant le traitement,
l'unité à mémoire d'information (4) étant prévue sur un tronçon d'extrémité (1') du rouleau de matériau de rebord et/ou sur une cassette (5) recevant le rouleau de matériau de rebord (1).
